# EUROPEAN PATENT APPLICATION

(11) **EP 4 811 525 A1**
(43) Date of publication of application: **23.09.2026**
(21) Application number: 25895660.6
(22) Date of filing: 18.11.2025
(51) Int. Cl.: H01M 50/383, H01M 50/593, H01M 50/505, H01M 50/342

(54) **BATTERY MODULE AND BATTERY PACK COMPRISING SAME**

(30) Priority: 22.11.2024 KR 20240168369
(71) Applicant: LG Energy Solution, Ltd., Seoul 07335 (KR)
(72) Inventor: JUNG, Kitaek, Daejeon 34122 (KR); KIM, Seho, Daejeon 34122 (KR); LEE, Dongwoo, Daejeon 34122 (KR); BAE, Inhwan, Daejeon 34122 (KR)
(74) Representative: BCKIP Part mbB
(86) International application number: PCT/KR2025/019058
(87) International publication number: WO 2026/111364

(57) **Abstract**

A battery module according to an embodiment of the present disclosure comprises: a module frame that accommodates a battery cell stack formed by stacking a plurality of battery cells, and has at least one surface opened; end plates that cover at least one opened surface of the module frame, respectively; an insulating plate that is disposed between the battery cell stack and the end plate, and surrounds a terminal busbar electrically connected to the battery cell stack; an inter-busbar electrically connected to the terminal busbar; and a fire-resistant cover part that surrounds a coupling portion between the inter-busbar and the terminal busbar and a part of the insulating plate.

## Description

### TECHNICAL FIELD

### Cross-Reference to Related Application(s)

This application claims priority to and the benefit of Korean Patent Application No. 10-2024-0168369, filed on November 22, 2024, the entire contents of which are incorporated herein by reference.

The present disclosure relates to a battery module and a battery pack including the same, and more particularly, to a battery module that minimize the reverse inflow of gases and flames caused by a thermal runaway phenomenon in adjacent battery modules into the inside of the battery module, and a battery pack including the same.

### BACKGROUND

As technology development and demands for mobile devices increase, the demand for batteries as energy sources is rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Small-sized mobile devices use one or several battery cells for each device, whereas middle or large-sized devices such as vehicles require high power and large capacity. Therefore, a middle or large-sized battery module having a plurality of battery cells electrically connected to one another is used.

The middle or large-sized battery module is preferably manufactured so as to have as small a size and weight as possible. For this reason, a prismatic battery, a pouch-type battery or the like, which can be stacked with high integration and has a small weight relative to capacity, is usually used as a battery cell of the middle or large-sized battery module. Meanwhile, in order to protect the battery cell stack from external impact, heat or vibration, the battery module may include a module frame in which a front surface and rear surface are opened to accommodate the battery cell stack in an internal space.

In particular, a battery pack is composed of a structure in which a plurality of battery modules are combined, and thus, if some battery modules get in an overvoltage, overcurrent, or overheating state, the safety and operational efficiency of the battery pack may be significantly problematic. In particular, in order to improve mileage, the capacity of the battery pack tends to gradually increase, whereby as the internal energy of the pack also increases, it is necessary to design a structure that satisfies the strengthened safety standards and ensures the safety of the vehicle and driver.

In this case, if a thermal runaway occurs in some battery modules disposed inside a battery pack, thermal propagation can occur to adjacent battery modules. In a battery module where thermal runaway has occurred, high-temperature gases and flames may be exhausted to the outside of the battery module. At this time, in addition to the battery module where thermal runaway has occurred, it is necessary to minimize the gas and flame that reversely flow into the inside of other adjacent battery modules.

However, external components of a battery module with low heat resistance, such as insulating materials for electrical insulation, can easily melt due to the gases and flames released from a battery module where thermal runaway has occurred, which causes a problem where gases and flames are highly likely to reversely flow into the inside of the battery module.

Consequently, there is a growing need to develop a battery module that minimize the reverse inflow of gases and flames caused by the occurrence of thermal runaway in adjacent battery modules into the inside of the battery module, and a battery pack including the same.

### DETAILED DESCRIPTION OF THE INVENTION

### Technical Problem

It is an object of the present disclosure to provide a battery module that minimize the reverse inflow of gases and flames caused by a thermal runaway phenomenon in adjacent battery modules into the inside of the battery module, and a battery pack including the same.

The objects of the present disclosure are not limited to the objects mentioned above, and additional other objects not described herein should be clearly understood by those skilled in the art from the following detailed description and the accompanying drawings.

### Technical Solution

According to an aspect of the present disclosure, provided is a battery module comprising: a module frame that accommodates a battery cell stack formed by stacking a plurality of battery cells, and has at least one surface opened; end plates that cover at least one opened surface of the module frame, respectively; an insulating plate that is disposed between the battery cell stack and the end plate, and surrounds a terminal busbar electrically connected to the battery cell stack; an inter-busbar electrically connected to the terminal busbar; and a fire-resistant cover part that surrounds a coupling portion between the inter-busbar and the terminal busbar and a part of the insulating plate.

In an embodiment, a part of the insulating plate may be a part that is not covered by the end plate, and the fire-resistant cover part may cover the part of the insulating plate so that it is not exposed to the outside of the battery module.

In an embodiment, the terminal busbar may be disposed on an upper part of the insulating plate, and the fire-resistant cover part may surround an upper part of the end plate and an upper part of the insulating plate together.

In an embodiment, the fire-resistant cover part may be extended so as to cover each corner of the upper part of the module frame.

In an embodiment, one end of the terminal busbar may be electrically connected to the battery cell stack, the other end of the terminal busbar may be electrically connected to one end of the inter-busbar, and the fire-resistant cover part may surround a coupling portion between the other end of the terminal busbar and one end of the inter-busbar.

In an embodiment, the fire-resistant cover part may comprise a through-hole into which one end of the inter-busbar is inserted, and the other end of the inter-busbar may be exposed to the outside of the fire-resistant cover part through the through-hole.

In an embodiment, the fire-resistant cover part may be pre-assembled in a form where it is fitted to the inter-busbar in a ring shape through the through-hole, and after one end of the inter-busbar is coupled to the terminal busbar, a coupling structure between the one end of the inter-busbar and the terminal busbar may be disposed inside the fire-resistant cover part.

In an embodiment, the other end of the terminal busbar and one end of the inter-busbar may be coupled to each other by a bolt member, and the fire-resistant cover part may further comprise a cover protruding part that is fitted to the bolt member.

In an embodiment, the terminal busbar may comprise a positive electrode terminal busbar and a negative electrode terminal busbar disposed to be spaced apart from each other on the upper part of the insulating plate, the inter-busbar may comprise a first inter-busbar electrically connected to the positive electrode terminal busbar and a second inter-busbar electrically connected to the negative electrode terminal busbar, and the fire-resistant cover part may comprise a first fire-resistant cover part that surrounds a coupling portion between the positive electrode terminal busbar and the first inter-busbar, and a second fire-resistant cover part that surrounds a coupling portion between the negative electrode terminal busbar and the second inter-busbar.

In an embodiment, the fire-resistant cover part may be made of a fire-resistant silicone rubber composition.

In an embodiment, a thickness of the fire-resistant cover part may be 0.1 cm or more and 1 cm or less.

In an embodiment, at least one venting hole may be formed in the upper part of the module frame.

In an embodiment, the battery module may further comprise a fire-resistant plate that covers the upper part of the module frame, wherein the fire-resistant plate may comprise venting incision parts, each of which is disposed at a position facing the at least one venting hole.

In an embodiment, the venting incision part may be formed on an upper surface or lower surface of the fire-resistant plate, and the venting incision part may be cut to a thickness less than the thickness of the fire-resistant plate, based on the thickness direction of the fire-resistant plate.

According to another aspect of the present disclosure, provided is a battery pack comprising the above-described battery module.

### BRIEF DESCRIPTION OF THE DRAWINGS

FIG. 1 is a perspective view showing a battery module according to an embodiment of the present disclosure.
FIG. 2 is an exploded perspective view showing a state in which the battery module of FIG. 1 is disassembled centering on the front surface part.
FIG. 3 is an enlarged perspective view of the fire-resistant cover part in the front surface part of the battery module of FIG. 1.
FIG. 4 is a diagram showing a part of the upper surface of the battery module of FIG. 1.
FIG. 5 is a front view showing the front surface of the battery module of FIG. 1.
FIG. 6 is a cross-sectional view showing a cross section taken along the A-A axis of FIG. 5.
FIG. 7 is a diagram showing the second fire-resistant cover part included in the battery module of FIG. 1.

### DETAILED DESCRIPTION OF THE EMBODIMENTS

Hereinafter, various embodiments of the present disclosure will be described in detail with reference to the accompanying drawings so that those skilled in the art can easily implement them. The present disclosure may be modified in various different ways, and is not limited to the embodiments set forth herein.

Portions that are irrelevant to the description will be omitted to clearly describe the present disclosure, and like reference numerals designate like elements throughout the specification.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and a region are shown to be exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

Below, the battery module according to an embodiment of the present disclosure will be described. However, the description herein is made based on the front surface of the front and rear surfaces of the battery module, without being limited thereto, and even in the case of the rear surface, the same or similar contents may be described.

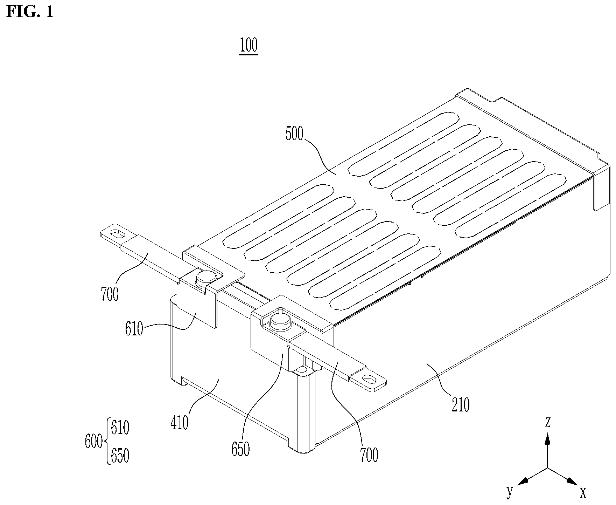

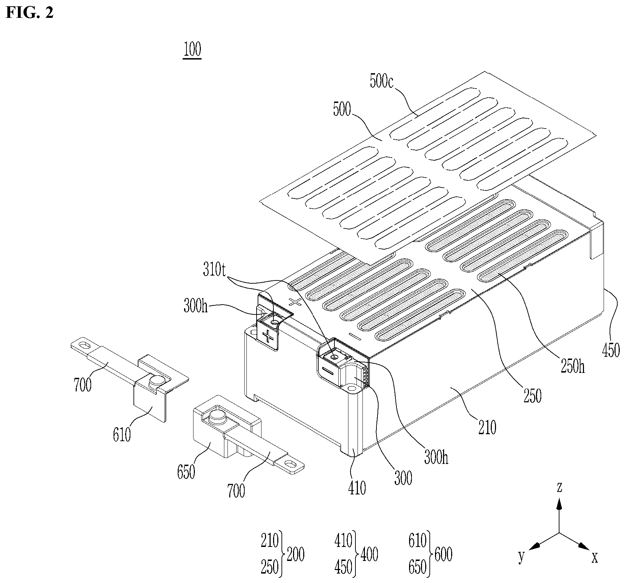

FIG. 1 is a perspective view showing a battery module according to an embodiment of the present disclosure. FIG. 2 is an exploded perspective view showing a state in which the battery module of FIG. 1 is disassembled centering on the front surface part.

Referring to FIGS. 1 and 2, a battery module 100 according to an embodiment of the present disclosure comprises a module frame 200 that accommodates a battery cell stack 110 formed by stacking a plurality of battery cells, and has at least one surface opened, and end plates 400 that cover at least one opened surface of the module frame 200, respectively.

The battery cell stack 110 may be composed of a plurality of battery cells (not shown), and may be formed by stacking a plurality of battery cells (not shown) so that they are electrically connected to each other. Further, although not shown in the figure, the battery cell stack 110 may be accommodated in the inside of the module frame 200 in a state in which a busbar frames (not shown) is located on each of the front and rear surfaces of the battery cell stack 110. At this time, the electrode leads formed on the plurality of battery cells included in the battery cell stack 110 may protrude toward the busbar frame (not shown).

Here, the busbar frame (not shown) may cover the battery cell stack 110 and simultaneously guide a connection between the battery cell stack 110 and an external device. As an example, a plurality of busbars can be disposed on the busbar frame (not shown) located on the rear surface of the battery cell stack 110, so that the plurality of battery cells may be connected in series or parallel. The busbar frame (not shown) may comprise an electrically insulating material. In this case, the busbar frame (not shown) limits contact between the busbar and the battery cell, except for the portion where the busbar is joined to the electrode lead included in the battery cell, thereby preventing the occurrence of a short circuit.

The plurality of battery cells (not shown) included in the battery cell stack 110 may be a pouch-type battery cell, or may be formed into a rectangular sheet-like structure. As an example, the plurality of battery cells (not shown) may be respectively manufactured by joining both ends of the cell case and one side part connecting them in a state in which the electrode assembly is accommodated in the cell case. In other words, the plurality of battery cells (not shown) may have sealing portions formed at both ends and one end. The sealing part has a structure that is sealed by a method such as heat fusion, and the remaining other side part may comprise a connection portion. Here, the cell case may be made of a laminate sheet including a resin layer and a metal layer.

The module frame 200 may protect the battery cell stack 110 accommodated inside the module frame 200 and the electrical components connected thereto from external physical impact. Here, the module frame 200 may have a structure in which a U-shaped lower frame 210 and an upper plate 250 are coupled together. In this case, the module frame may be formed by coupling an upper plate 250 to the upper side of a U-shaped lower frame 210, which is made of metal plate material of which the lower surface and both side surfaces are coupled or integrated, and can be manufactured by press molding. However, the structure of the module frame 200 is not limited thereto, and the module frame may have a mono-frame structure. In this case, the mono-frame may be in the form of a metal plate material of which the upper surface, lower surface, and both side surfaces are integrated, and may be manufactured by extrusion molding.

In addition, a thermally conductive resin may be injected between the battery cell stack 110 and the lower surface of the module frame 200, and a thermally conductive resin layer (not shown) may be formed between the battery cell stack 110 and the lower surface of the module frame 200 through the injected thermally conductive resin.

The end plate 400 can be joined to the module frame 200 while covering at least one opened surface of the module frame 200. More specifically, the end plate 400 includes a first end plate 410 that covers the opened front surface of the module frame 200, and a second end plate 450 that covers the opened rear surface of the module frame 200. More specifically, the first end plate 410 and the second end plate 450 may be respectively joined to the front and rear surfaces of the module frame 200, while covering the busbar frame (not shown). That is, the busbar frame (not shown) may be located between the first end plate 410 and the battery cell stack 110, and the busbar frame (not shown) may be located between the second end plate 450 and the battery cell stack 110.

The first end plate 410 and the second end plate 450 may protect the components inside the module frame 200 and various electrical components connected thereto from external impact, and for this purpose, they must have a prescribed strength, and may include a metal such as aluminum. Furthermore, the first end plate 410 and the second end plate 450 may be respectively joined to corresponding corners of the module frame 200 by a method such as welding.

Referring to FIGS. 1 and 2, the battery module 100 according to the present embodiment may further include a fire-resistant plate 500 that covers the upper part of the module frame 200. More specifically, the fire-resistant plate 500 may cover the whole of the upper plate 250.

In particular, as shown in FIG. 2, in the battery module 100 according to the present embodiment, at least one venting hole 250h may be formed on the upper part of the module frame 200. That is, at least one venting hole 250h may be formed in the upper plate 250. As an example, in the upper plate 250, at least one venting hole 250h may be disposed to be spaced apart from each other at equal intervals.

The fire-resistant plate 500 may include a venting incision part 500c disposed at positions facing at least one venting hole 250h, respectively. More specifically, the venting incision part 500c may be formed on an upper surface or lower surface of the fire-resistant plate 500. As an example, the venting incision part 500c may be cut to a thickness smaller than the thickness of the fire-resistant plate 500 based on the thickness direction of the fire-resistant plate 500.

Thereby, in the battery module 100 according to the present embodiment, when the battery module 100 operates normally, the venting incision part 500c is closed, so that the inside of the battery module 100 may be hermetically sealed. However, when the battery module 100 operates abnormally, the pressure inside the battery module 100 may increase, and the venting incision part 500c may be easily ruptured if the pressure inside the battery module 100 is equal to or greater than a prescribed pressure. That is, when the battery module 100 according to the present embodiment operates abnormally, gas and/or flame generated inside the battery module 100 may be discharged to the outside of the battery module 100 through the module venting hole 250h and the ruptured portion of the venting incision part 500c.

Referring to FIGS. 1 and 2, the battery module 100 according to an embodiment of the present disclosure may include an insulating plate 300 that is disposed between the battery cell stack 110 and the end plate 400, and surrounds a terminal busbar 300t electrically connected to the battery cell stack 110. Here, the insulating plate 300 comprises an electrically insulating material, and may electrically insulate between the busbar frame (not shown) and the end plate 400. As an example, the insulating plate 300 may be made of an injection-molded material such as PC-ABS. However, the insulating plate is not limited thereto, and may be included in the present embodiment as long as it is a material having a sufficient electrical insulation property.

More specifically, as shown in FIG. 2, in the insulating plate 300, a terminal busbar 300t electrically connected to the battery cell stack 110 may be exposed on the outer surface of the insulating plate 300. More specifically, the insulating plate 300 may include a terminal busbar opening part 300h through which the terminal busbar 300t disposed on a busbar frame (not shown) is exposed to the outside of the insulating plate 300. As an example, as shown in FIG. 2, the terminal busbar 300t includes an upwardly protruding portion, and this upwardly protruding portion may be exposed to the outside of the insulating plate 300 through the terminal busbar opening part 300h of the insulating plate 300.

Referring to FIGS. 1 and 2, the battery module 100 according to the present embodiment may further include an inter-busbar 700 that is electrically connected to the terminal busbar 300t exposed through the terminal busbar opening part 300h. More specifically, in the battery module 100 according to the present embodiment, one end of the terminal busbar 300t may be electrically connected to the battery cell stack 110, and the other end of the terminal busbar 300t may be electrically connected to one end of the inter-busbar 700. In addition, the other end of the inter-busbar 700 may be connected to the battery module where the terminal busbar 300t is located, another battery module, or a BDU (Battery Disconnect Unit), forming a HV (high voltage) connection.

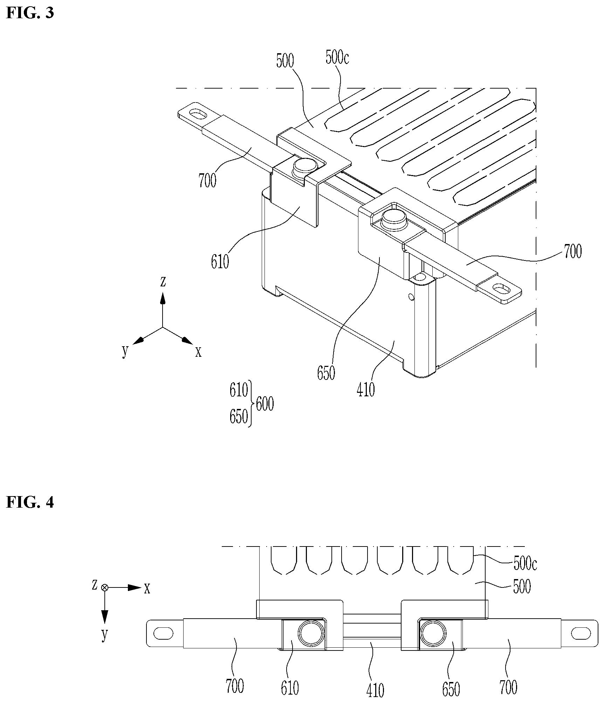

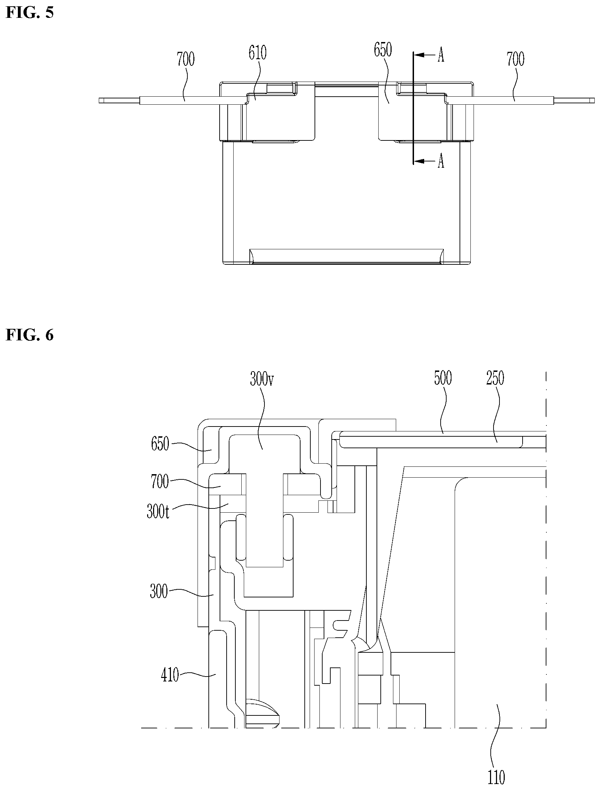

FIG. 3 is an enlarged perspective view of the fire-resistant cover part in the front surface part of the battery module of FIG. 1. FIG. 4 is a diagram showing a part of the upper surface of the battery module of FIG. 1. FIG. 5 is a front view showing the front surface of the battery module of FIG. 1. FIG. 6 is a cross-sectional view showing a cross section taken along the A-A axis of FIG. 5.

Referring to FIG. 2, the terminal busbar 300t may include a positive electrode terminal busbar and a negative electrode terminal busbar, which are disposed to be spaced apart from each other on the upper part of the insulating plate 300. At this time, a pair of terminal busbar opening parts 300h may be formed in the insulating plate 300, and the pair of terminal busbar opening parts 300h may be disposed to be spaced apart from each other on the upper part of the insulating plate 300. Here, the inter-busbar 700 may include a first inter-busbar electrically connected to the positive electrode terminal busbar, and a second inter-busbar electrically connected to the negative electrode terminal busbar.

Referring to FIGS. 3 to 5, the fire-resistant cover part 600 may include a first fire-resistant cover part 610 that surrounds a coupling portion between the positive electrode terminal busbar and the first inter-busbar, and a second fire-resistant cover part 650 that surrounds a coupling portion between the negative electrode terminal busbar and the second inter-busbar.

Referring to FIGS. 3 to 5, the battery module 100 according to the present embodiment includes a fire-resistant cover part 600 that surrounds a coupling portion between the inter-busbar 700 and the terminal busbar 300t and a part of the insulating plate 300.

Here, the fire-resistant cover part 600 may surround a coupling portion between the other end of the terminal busbar 300t and one end of the inter-busbar 700. In addition, the fire-resistant cover part 600 may completely cover a part of the insulating plate 300 so that the part of the insulating plate 300 is not exposed to the outside of the battery module 100. Here, a part of the insulating plate 300 may refer to a part that is not covered by the first end plate 410. As an example, as shown in FIG. 3, the first end plate 410 covers on the insulation plate 300, and the insulating plate 300 may not be covered by the first end plate 410 at a portion where a terminal busbar 300t disposed on the insulating plate 300 is located. At this time, the fire-resistant cover part 600 may cover a part of the insulating plate 300 so that it is not exposed to the outside of the battery module 100.

Further, as shown in FIG. 4, the fire-resistant cover part 600 may be extended so as to cover each corner of the upper part of the module frame 200, so that the upper part of the insulating plate 300 may be covered so as not to be exposed to the outside of the battery module 100.

As shown in FIGS. 3 to 5, the terminal busbar 300t is disposed on the upper part of the insulating plate 300, and the fire-resistant cover part 600 may surround both the upper part of the first end plate 410 and the upper part of the insulating plate 300.

Referring to FIGS. 5 and 6, in the battery module 100 according to the present embodiment, the other end of the terminal busbar 300t and one end of the inter-busbar 700 may be coupled to each other by a bolt member 300v. Here, the fire-resistant cover part 600 may surround the bolt member 300v as well as the coupling portion between the inter-busbar 700 and the terminal busbar 300t.

As a result, in the battery module 100 according to the present embodiment, the fire-resistant cover part 600 has a structure that completely surrounds the coupling portion between the inter-busbar 700 and the terminal busbar 300t and a part of the insulating plate 300, which offers the advantage of preventing the coupling portion between the inter-busbar 700 and the terminal busbar 300t and a part of the insulating plate 300 from melting in an external high-temperature environment. In particular, the coupling portion between the inter-busbar 700 and the terminal busbar 300t and a part of the insulating plate 300 may be safely protected from high-temperature gas and flames caused by thermal runaway of adjacent battery modules through the fire-resistant cover part 600, which may effectively prevent high-temperature gases and flames from reversely flowing into the inside of the battery module 100.

The fire-resistant cover part 600 may be formed of a fire-resistant silicone rubber composition. As an example, when the fire-resistant cover part 600 is exposed directly to a high-temperature environment, such as flame or fire, the fire-resistant silicone rubber composition contained within the fire-resistant cover part 600 may harden. At this time, as the fire-resistant cover part 600 hardens in a high-temperature environment, it can more effectively prevent high-temperature gases and flames from reversely flowing into the battery module 100.

As an example, the thickness of the fire-resistant cover part 600 may be 0.5 mm or more and 20 mm or less. As another example, the thickness of the fire-resistant cover part 600 may be 1 mm or more and 10 mm or less. As another example, the thickness of the fire-resistant cover part 600 may be 1.5 mm or more and 5 mm or less.

Thereby, in the battery module 100 according to the present embodiment, the fire-resistant cover part 600 is formed to have a thickness within the above-described range, so that the coupling portion between the inter-busbar 700 and the terminal busbar 300t, as well as a part of the insulating plate 300 can be safely protected from high-temperature gases and flames generated by thermal runaway of an adjacent battery module by the fire-resistant cover part 600, which can effectively prevent high-temperature gases and flames from reversely flowing into the inside of the battery module 100.

Unlike the same, if the thickness of the fire-resistant cover part is less than 0.5 mm, the fire-resistant cover part 600 is highly likely to be damaged or deformed in a high-temperature environment, such as a thermal runaway of the battery module 100, which may make it difficult to prevent high-temperature gases and flames from reversely flowing into the battery module 100. Furthermore, if the thickness of the fire-resistant cover part exceeds 20 mm, the size of the battery module 100 may become unnecessarily large, which may lead to problems such as a decrease in space efficiency and a reduction in battery capacity.

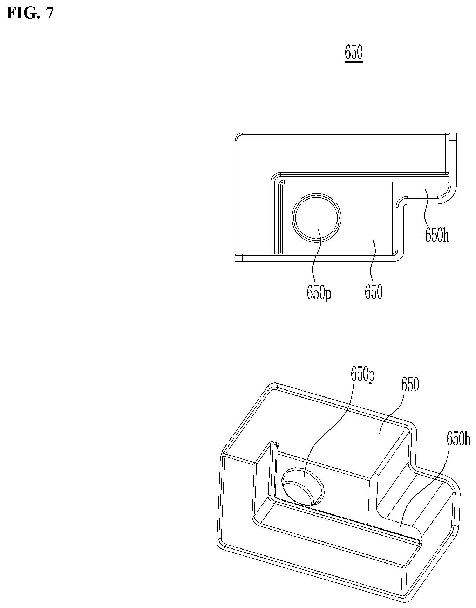

FIG. 7 is a diagram showing the second fire-resistant cover part included in the battery module of FIG. 1.

For convenience of explanation, the second fire-resistant cover part 650 will be mainly described, but the first fire-resistant cover part 610 may also be described similarly.

Referring to FIGS. 3 and 7, the second fire-resistant cover part 650 may include a through-hole 650h into which one end of the inter-busbar 700 is inserted. More specifically, the other end of the inter-busbar 700 may be exposed to the outside of the second fire-resistant cover part 650 through the through-hole 650h. That is, only the other end of the inter-busbar 700 may be exposed to the outside of the second fire-resistant cover part 650, and the terminal busbar 300t electrically connected to one end of the inter-busbar 700 may be disposed inside the second fire-resistant cover part 650.

The second fire-resistant cover part 650 may be primarily fixed to the inter-busbar 700 before being coupled to the battery module 100. More specifically, the second fire-resistant cover par 650 may be pre-assembled in a form where it is fitted to the inter-busbar 700 in a ring shape through the through-hole 650h. Subsequently, in a state in which the second fire-resistant cover part 650 is hanging from the inter-busbar 700, the inter-busbar 700 may be coupled to the terminal busbar 300t. That is, after one end of the inter-busbar 700 is coupled to the terminal busbar 300t, the coupling structure between the one end of the inter-busbar 700 and the terminal busbar 300t may be disposed inside the second fire-resistant cover part 650.

Referring to FIGS. 5 and 6, the second fire-resistant cover part 650 may further include a cover protruding part 650p that is fitted to a bolt member 300v. At this time, as a cover protruding part 650p is fitted to a bolt member 300v, the second fire-resistant cover part 650 may be secondarily fixed.

That is, in a state in which the second fire-resistant cover part 650 is hanging from the inter-busbar 700, one end of the inter-busbar 700 is coupled to the terminal busbar 300t, and the cover protruding part 650p of the second fire-resistant cover part 650 is fitted to a bolt member 300v, so that the second fire-resistant cover part 650 can be stably fixed onto the first end plate 410.

Thereby, in the battery module 100 according to the present embodiment, the second fire-resistant cover part 650 facilitates the coupling between the inter-busbar 700 and the terminal busbar 300t in a state of being primarily fixed to the inter-busbar 700, and also may be secondarily fixed onto the first end plate 410, which offer the advantage of improving ease of assembly and structural stability.

A battery pack according to another embodiment of the present disclosure includes the battery module described above. Meanwhile, one or more battery modules according to the present embodiment may be packaged within a pack case to form a battery pack.

The above-mentioned battery module and battery pack including the same can be applied to various devices. Such a device can be applied to a vehicle means such as an electric bicycle, an electric vehicle, or a hybrid vehicle, but the present disclosure is not limited thereto, and is applicable to various devices capable of using a battery module and a battery pack including the same, which also falls under the scope of the present disclosure

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100: battery module
200: module frame
210: lower frame
250: upper plate
250h: module venting hole
300: insulating plate
300h: terminal busbar opening part
300t: terminal busbar
300v: bolt member
400: end plate
500: fire-resistant plate
500c: venting incision part
600: fire-resistant cover part
610: first fire-resistant cover part
650: second fire-resistant cover part
700: inter-busbar

### Industrial Applicability

A battery module and a battery pack including the same according to embodiments of the present disclosure can completely surround a coupling portion between an inter-busbar and a terminal busbar, and a part of the insulating plate through a fire-resistant cover part, thereby minimizing the reverse inflow of gases and flames caused by a thermal runaway phenomenon in adjacent battery modules into the inside of the battery module.

The effects of the present disclosure are not limited to the effects mentioned above and additional other effects not described above will be clearly understood from the detailed description and the appended drawings by those skilled in the art.

## Claims

1. A battery module comprising:
a module frame that accommodates a battery cell stack formed by stacking a plurality of battery cells, and has at least one surface opened;
end plates that cover at least one opened surface of the module frame, respectively;
an insulating plate that is disposed between the battery cell stack and the end plate, and surrounds a terminal busbar electrically connected to the battery cell stack;
an inter-busbar electrically connected to the terminal busbar; and
a fire-resistant cover part that surrounds a coupling portion between the inter-busbar and the terminal busbar and a part of the insulating plate.

2. The battery module according to claim 1,
wherein a part of the insulating plate is a part that is not covered by the end plate, and
the fire-resistant cover part covers the part of the insulating plate so that it is not exposed to the outside of the battery module.

3. The battery module according to claim 1,
wherein the terminal busbar is disposed on an upper part of the insulating plate, and
the fire-resistant cover part surrounds an upper part of the end plate and an upper part of the insulating plate together.

4. The battery module according to claim 3,
wherein the fire-resistant cover part is extended so as to cover each corner of the upper part of the module frame.

5. The battery module according to claim 1,
wherein one end of the terminal busbar is electrically connected to the battery cell stack,
the other end of the terminal busbar is electrically connected to one end of the inter-busbar, and
the fire-resistant cover part surrounds a coupling portion between the other end of the terminal busbar and one end of the inter-busbar.

6. The battery module according to claim 5,
wherein the fire-resistant cover part comprises a through-hole into which one end of the inter-busbar is inserted, and
the other end of the inter-busbar is exposed to the outside of the fire-resistant cover part through the through-hole.

7. The battery module according to claim 6,
wherein the fire-resistant cover part is pre-assembled in a form where it is fitted to the inter-busbar in a ring shape through the through-hole, and
after one end of the inter-busbar is coupled to the terminal busbar, a coupling structure between the one end of the inter-busbar and the terminal busbar is disposed inside the fire-resistant cover part.

8. The battery module according to claim 5,
wherein the other end of the terminal busbar and one end of the inter-busbar are coupled to each other by a bolt member, and
the fire-resistant cover part further comprises a cover protruding part that is fitted into the bolt member.

9. The battery module according to claim 1,
wherein the terminal busbar comprises a positive electrode terminal busbar and a negative electrode terminal busbar disposed to be spaced apart from each other on the upper part of the insulating plate,
the inter-busbar comprises a first inter-busbar electrically connected to the positive electrode terminal busbar and a second inter-busbar electrically connected to the negative electrode terminal busbar, and
the fire-resistant cover part comprises a first fire-resistant cover part that surrounds a coupling portion between the positive electrode terminal busbar and the first inter-busbar, and a second fire-resistant cover part that surrounds a coupling portion between the negative electrode terminal busbar and the second inter-busbar.

10. The battery module according to claim 1,
wherein the fire-resistant cover part is made of a fire-resistant silicone rubber composition.

11. The battery module according to claim 1,
wherein a thickness of the fire-resistant cover part is 0.1 cm or more and 1 cm or less.

12. The battery module according to claim 1,
wherein at least one venting hole is formed in the upper part of the module frame.

13. The battery module according to claim 12,
further comprising a fire-resistant plate that covers the upper part of the module frame,
wherein the fire-resistant plate comprises venting incision parts, each of which is disposed at a position facing the at least one venting hole.

14. The battery module according to claim 13,
wherein the venting incision part is formed on an upper surface or lower surface of the fire-resistant plate, and
the venting incision part is cut to a thickness less than the thickness of the fire-resistant plate, based on the thickness direction of the fire-resistant plate.

15. A battery pack comprising the battery module according to claim 1.
